# EUROPEAN PATENT APPLICATION

(11) **EP 2 725 501 A1**
(43) Date of publication of application: **30.04.2014**
(21) Application number: 11856013.5
(22) Date of filing: 04.08.2011
(51) Int. Cl.: G06F 17/30

(54) **SYSTEM FOR INTERACTIVELY SEARCHING FOR AND DISPLAYING INFORMATION**

(30) Priority: 20.01.2011 RU 2011102025
(71) Applicant: Tabun, Peter Yurevich, Moskovskaya obl. 143346 (RU); Kolomietc, Elena Sergeevna, Moskovskaya obl. 143346 (RU)
(72) Inventor: Tabun, Peter Yurevich, Moskovskaya obl. 143346 (RU); Kolomietc, Elena Sergeevna, Moskovskaya obl. 143346 (RU)
(74) Representative: Lorente Berges, Ana
(86) International application number: PCT/RU2011/000590
(87) International publication number: WO 2012/099490

(57) **Abstract**

The proposed utility model relates to technology for searching for information in computer networks. The system for interactively searching for and displaying information comprises a server comprising a device for receiving and processing information which is capable of processing the received information, bringing said processed information into line with a record in a data base, receiving a query for conducting a search and displaying search results, recovering information corresponding to the search query from a data base, and generating and transmitting the resultant response to the query. Said device for receiving and processing information is connected to at least two data bases, an operator terminal, a network and a device for exchanging information with a user via corresponding interfaces. The technical effect achieved by the claimed utility model is increased productivity resulted from reduced search time, and furthermore, the present utility model can be used more sophisticated.

## Description

### Field of Utility Model

The present utility model relates to information technology, in particular, to search engines or systems allowing to perform search in global and/or local networks.

### Background Art

Engines or systems for searching for and displaying information, such as Google (www.google.com) or Yandex (www.yandex.ru) are widely known in the art. Such engines or systems allow the user to receive information in response to a query. Said systems are based on using server-side specialized software (so-called web crawlers) that download web pages from the network (e.g., from the internet), index (analyze) the downloaded pages and record the indexed pages in a server-side database at specific time intervals. Then, upon receiving a query from a user terminal, the engine or system retrieves the search results from the database and outputs them to the client in the form of hyperlinks to website pages.

Said engines or systems have the following disadvantages: web crawlers download and analyze all pages found in the network, which results in low search relevance in such engines or systems.

Furthermore, said engines or systems output the search results in such way that, in order to use the hyperlink, it is necessary to open the webpage associated therewith in a new tab or to load the webpage completely, thus navigating away from the search results page, which is inconvenient for the user and leads to increased search time.

Furthermore, it is often necessary for the user to adjust the query when, for example, the number of search results output by the system is too large or when the search results contain links to web pages having content which wording is similar to that of the query but which meaning differs from that of the query.

Upon adjusting the search query, the previous search results page is replaced by the page with adjusted search results. In case when the adjusted query is unsuccessful (e.g., no relevant pages were found), the user has to return to the previous query page (e.g. by pressing the Backspace key), which increases search time. Furthermore, if the browser cache in the user's web browser is disabled, said return causes a complete reloading of the previous page, which takes some time and leads to increased search time.

Furthermore, said engines or systems do not provide the technical capability for simultaneous search for topics related to the search query topic. When the user searches for information related to, for example, real estate, the user is also interested in information regarding real estate loans or mortgage, homeowner's insurance, ordering real estate design projects, construction and maintenance, supply of construction materials, ordering furniture and items of interior design, i.e. all aspects of household ownership.

Studies monitoring search query statistics for the internet users show that when a user performs a search with the "buy apartment" query, he or she then searches for "real estate loans and mortgage", "interior design", "apartment maintenance, construction firms and crews", etc., up to moving services and domestic staff. Therefore, it is obvious that the user searches for all information regarding household ownership by picking keywords and spending a great deal of time on searching and filtering through huge amounts of data. Poll results show that the internet users need to save time on searching for relevant and exhaustive information necessary to satisfy the needs, i.e. for services provided by nearby businesses that can perform the given service in a timely manner. Therefore, it is a problem in the art how to provide all relevant information needed by the user of the internet or other network using one web resource, how to display said information on one page and how to allow search with various search criteria with possibility of adjusting said criteria and receiving necessary information, thus significantly decreasing time and money costs.

The closest prior art for the present utility model is a system or engine for searching for information in a computer network (Russian Utility Model patent 8819 U1, 16.12.1998, IPC G06F 17/30), the system comprising a server (300) comprising a device (310) for receiving and processing information which is capable of processing the received information, bringing said processed information into line with a record in memory (e.g., in a database), receiving a query from at least one user terminal (330, 331) adapted to generate search queries and displaying search results; recovering information corresponding to the search query from a database, and generating and transmitting the response to the query to the user terminal for subsequently displaying said response on the user terminal.

The prior art system has all aforementioned disadvantages which increase time spent on searching for relevant information, and therefore, negatively affect the convenience of using search systems.

### Summary of the Utility Model

The object of the present utility model is to eliminate the aforementioned disadvantages.

The technical effect achieved by the claimed utility model is increased productivity resulted from reduced search time; and furthermore, the present utility model can be used more sophisticated.

The object is solved by providing a system for interactively searching for and displaying information, the system comprising a server comprising a device for receiving and processing information which is capable of
processing the received information, bringing said processed information into line with a record in a database, receiving a query for conducting a search and displaying search results; recovering information corresponding to the search query from a database, and generating and transmitting a resultant response to the query. Said device for receiving and processing information is connected with at least two databases, with the operator terminal, with the network, and with the user data communication device via corresponding interfaces, and the device is adapted to receive data from the network and/or from the operator terminal, to process at least a part of the received data in order to bring said part of the data into line with a record in the corresponding database, to carry out said recording, to receive a search query from the user data communication device, to analyze the search query, to retrieve data from at least one database in accordance with the results of search query analysis, to generate the resultant response to the search query and to transmit the resultant response to the search query to the user data communication device. The system further comprises at least one user terminal connected to the user data communication device via a communication line. Furthermore, the user terminal is adapted to generate and transmit a search query to the user data communication device via the interface provided by the user data communication device and via the user terminal browser; the user terminal is further adapted to receive the generated resultant response to the search query from the user data communication device, and to display the resultant response on the user terminal screen. The interface provided by the user data communication device is configured to provide the possibility of selecting a primary search criterion and at least one additional search criterion. Selecting an additional search criterion causes the user data communication device to command the device for receiving and processing information to perform an additional retrieval of data corresponding to the selected additional search criterion from the database and to include said data into the generated resultant response to the search query. The interface provided by the user data communication device is adapted to provide a generated resultant response to the search query, which is adapted to be displayed on the user terminal in order to display data regarding the primary and at least one additional search criteria on one browser page. The user data communication device further comprises a caching unit adapted to cache at least one generated resultant response to the search query.

### Brief Description of the Drawings

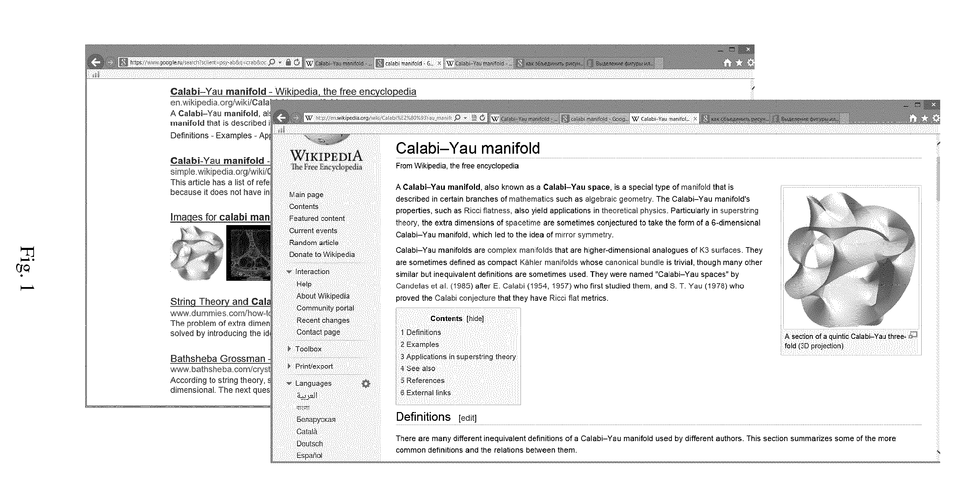

Fig. 1 shows search query pages of the prior art system;

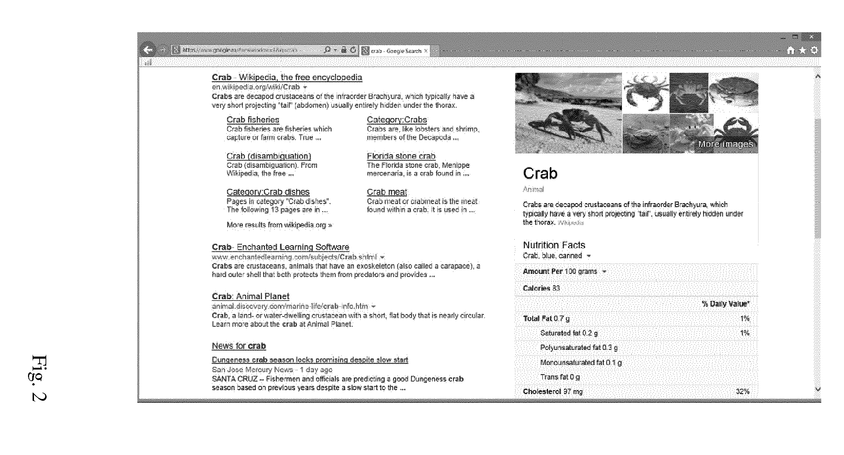

Fig. 2 shows search query pages of the prior art system including search results;

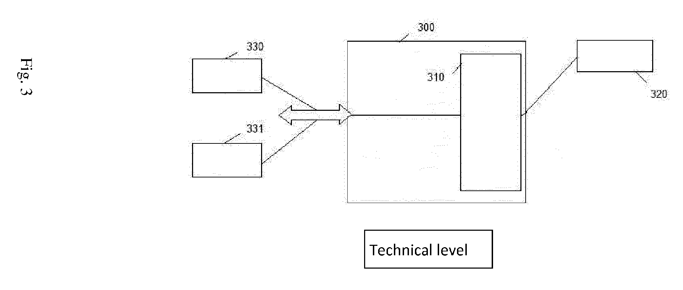

Fig. 3 shows a schematic flowchart of the prior art system;
Fig. 4 shows a schematic flowchart of the present device;
Fig. 5 shows a search page with search criteria.

### Description of the Preferred Embodiment

It is apparent to those skilled in the art that features disclosed below are not intended to limit the spirit and scope of the present utility model. For example, it is obvious that communication lines (e.g. between the user terminal and the server) can be implemented in various ways. Said lines can be wire-based lines, optic fiber lines or wireless lines. Therefore, the combination of all features is subject to patent rights protection as defined in the accompanying claims. The above is true for other features as well. In particular, the user terminal can be a desktop computer, a laptop computer, a netbook, a mobile phone, a computer tablet or a similar device adapted to transmit and receive network data, and to display said data to the user.

In the main embodiment, the utility model is a system for interactively searching for and displaying information, said system comprising a server (400) comprising a device (410) for receiving and processing data, said device for receiving and processing information connected with at least two databases (421, 422), with the operator terminal (430), with the network (440) (e.g., the internet), and with the user data communication device (450) via corresponding interfaces, and the device is adapted to receive data from the network and/or from the operator terminal, to process at least a part of the received data in order to bring said part of the data into line with a record in the corresponding database, to carry out said recording, to receive a search query from the user data communication device, to analyze the search query, to retrieve data from at least one database in accordance with the results of search query analysis, to generate the resultant response to the search query and to transmit the resultant response to the search query to the user data communication device, wherein the system further comprises at least one user terminal (460) connected to the user data communication device via a communication line (470), said user terminal adapted to generate and transmit a search query to the user data communication device via the interface (451) provided by the user data communication device and via the user terminal browser; the user terminal is further adapted to receive the generated resultant response to the search query from the user data communication device, and to display the resultant response on the user terminal screen, wherein the interface provided by the user data communication device is configured to provide the possibility of selecting a primary search criterion and at least one additional search criterion, wherein selecting an additional search criterion causes the user data communication device to command the device for receiving and processing information to perform an additional retrieval of data corresponding to the selected additional search criterion from the database and to include said data into the generated resultant response to the search query, wherein the interface provided by the user data communication device is adapted to provide a generated resultant response to the search query, which is adapted to be displayed on the user terminal in order to display data regarding the primary and at least one additional search criteria on one browser page, and wherein the user data communication device further comprises a caching unit (452) adapted to cache at least one generated resultant response to the search query.

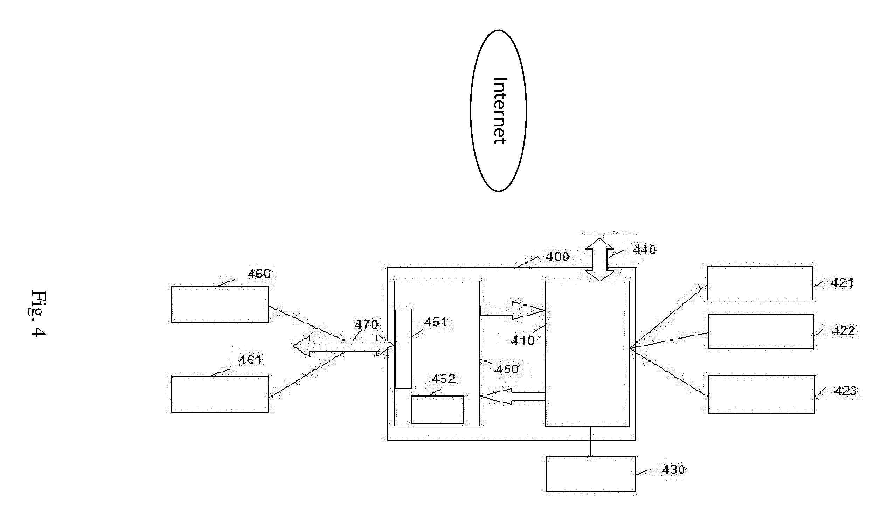

Fig. 4 further shows an embodiment with more than one user terminal (461) and more than two databases (423). Furthermore, it is apparent that the communication line between the user terminal and the server can be the internet.

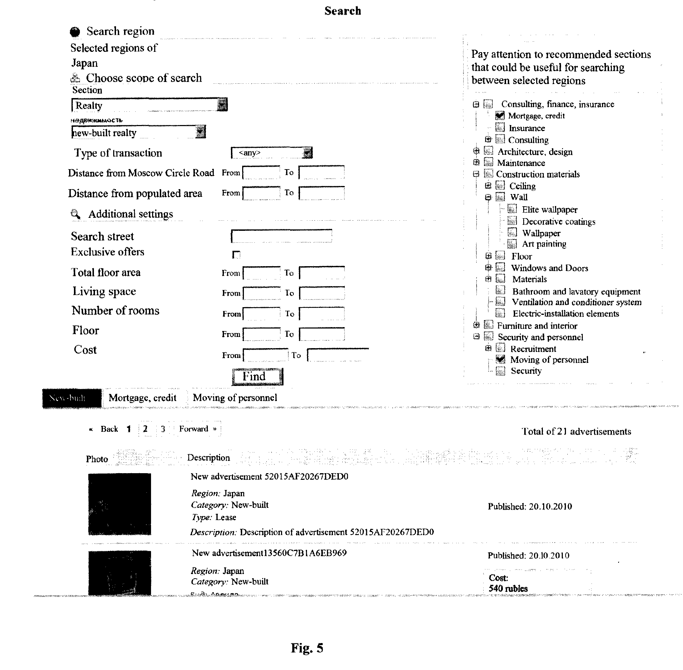

The system is operated as follows. The user accesses the server via the user terminal as described above. The user terminal comprises software (browser) which allows the user to operate the server-side interface. Fig. 5 illustrates the selection of the primary search criterion (direction) by the user taking into account the geographical region of the user, wherein the user is provided with an option of selecting additional search criteria thematically linked to the primary criterion. Furthermore, the user can narrow the search for both the primary and the additional criteria using several sublevels (in this instance, by means of a tree structure). As shown in Fig. 5, the search results for both the primary and the additional criteria are displayed in the same window used for selecting search criteria. In particular, a window frame with tabs can be used, wherein upon activating said tabs, a generated response for the corresponding criterion is displayed. Due to the possibility of caching the search query response, the user does not have to refresh the page in order to return to previous search results, which significantly decreases search time and therefore allows for more convenient search engine operation.

Since the additional search criteria are linked to the primary criterion, the search time is also reduced. In particular, Fig. 5 shows that the user searches for newly-built real estate property in Japan. The selected additional criteria are "real estate loans, mortgage" and "moving services". In this case, the user will receive data from databases corresponding to selected criteria. When a corresponding tab in the window frame is activated, said information will be displayed for viewing. In particular, the "real estate loans, mortgage" tab provides information regarding companies providing mortgage for the newly-built real estate property in Japan.

Filling the databases by means of an operator terminal allows to filter out undesired content and to record verified data in the database, which allows the user to avoid browsing "junk" data, reduces search time and allows for more convenient search engine operation.

The caching device can be a data storage device adapted to record and read data, said device controlled by the data communication device and connected to the user data communication device using memory device connection methods known in the art.

Furthermore, the engine or system for searching for information disclosed herein does not preclude use of traditional methods of displaying information. For example, the present engine or system can include means for ranking data displayed when the resultant response to the search query is generated. Said data ranking can be based on methods for data ranking widely used in the art in order to further increase the relevance of search results displayed on the user screen.

## Claims

1. system for interactively searching for and displaying information, the system comprising a server comprising a device for receiving and processing information which is capable of processing the received information, bringing said processed information into line with a record in a database, receiving a query for conducting a search and displaying search results; recovering information corresponding to the search query from a data base, and generating and transmitting a resultant response to the query, **characterized in that** said device for receiving and processing information is connected with at least two databases, with the operator terminal, with the network, and with the user data communication device via corresponding interfaces, and the device is adapted to receive data from the network and/or from the operator terminal, to process at least a part of the received data in order to bring said part of the data into line with a record in the corresponding database, to carry out said recording, to receive a search query from the user data communication device, to analyze the search query, to retrieve data from at least one database in accordance with the results of search query analysis, to generate the resultant response to the search query and to transmit the resultant response to the search query to the user data communication device, wherein the system further comprises at least one user terminal connected to the user data communication device via a communication line, said user terminal adapted to generate and transmit a search query to the user data communication device via the interface provided by the user data communication device and via the user terminal browser; the user terminal is further adapted to receive the generated resultant response to the search query from the user data communication device, and to display the resultant response on the user terminal screen, wherein the interface provided by the user data communication device is configured to provide possibility of selecting a primary search criterion and at least one additional search criterion, wherein selecting an additional search criterion causes the user data communication device to command the device for receiving and processing information to perform an additional retrieval of data corresponding to the selected additional search criterion from the database and to include said data into the generated resultant response to the search query, wherein the interface provided by the user data communication device is adapted to provide the generated resultant response to the search query, which is adapted to be displayed on the user terminal in order to display data regarding the primary and at least one additional search criteria on one browser page, and wherein the user data communication device further comprises a caching unit adapted to cache at least one generated resultant response to the search query.
